(19) **Europäisches Patentamt**
**European Patent Office**
**Office européen des brevets**

(11) **EP 3 492 927 B1**

(12) **FASCICULE DE BREVET EUROPEEN**

(45) Date de publication et mention de la délivrance du brevet:
**08.07.2020 Bulletin 2020/28**

(51) Int Cl.:
*G01P 5/00* (2006.01)   *G01P 5/14* (2006.01)
*G01M 9/06* (2006.01)   *B63H 9/06* (2020.01)

(21) Numéro de dépôt: **18208863.3**

(22) Date de dépôt: **28.11.2018**

(54) **VOILIER COMPRENANT UN PROFIL AERODYNAMIQUE ET UN SYSTEME POUR LA DETERMINATION DE CARACTERISTIQUES D'UN ECOULEMENT D'AIR INCIDENT SUR UN BORD D'ATTAQUE DU PROFIL AERODYNAMIQUE**

SEGELSCHIFF MIT EINEM AERODYNAMISCHEN PROFIL UND EINEM SYSTEM ZUR BESTIMMUNG DER EIGENSCHAFTEN DES LUFTSTROMS, DER AUF EINE VORDERKANTE DES AERODYNAMISCHEN PROFILS TRIFFT

SAILING VESSEL COMPRISING AN AERODYNAMIC PROFILE AND A SYSTEM FOR DETERMINING CHARACTERISTICS OF AN INCIDENT AIR FLOW ON A LEADING EDGE OF THE AERODYNAMIC PROFILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1761483**

(43) Date de publication de la demande:
**05.06.2019 Bulletin 2019/23**

(73) Titulaire: **Airbus Operations SAS**
**31060 Toulouse (FR)**

(72) Inventeurs:
• **SORNIQUE, Olivier**
**32600 LIAS (FR)**

• **STUDER, Gilles**
**31470 FONSORBES (FR)**
• **RENARD, Thierry**
**31100 TOULOUSE (FR)**

(74) Mandataire: **Brevalex**
**95, rue d'Amsterdam**
**75378 Paris Cedex 8 (FR)**

(56) Documents cités:
**EP-A1- 1 211 633      EP-A1- 2 409 912**
**WO-A1-94/15832      GB-A- 2 349 699**
**JP-A- H02 262 494**

**Description**

## DOMAINE TECHNIQUE

La présente invention concerne un voilier comprenant un profil aérodynamique et un système pour la détermination de caractéristiques d'un écoulement d'air incident sur un bord d'attaque du profil aérodynamique.

## ÉTAT DE LA TECHNIQUE ANTÉRIEURE

La détermination de caractéristiques d'orientation et de vitesse d'un écoulement d'air incident sur le bord d'attaque d'une voile d'un voilier repose conventionnellement sur l'utilisation de girouettes et d'anémomètres, ainsi que sur l'utilisation de données météorologiques.

Ces instruments et données ne fournissent qu'une information globale, et ne permettent pas en particulier de connaître précisément la direction et la vitesse de l'écoulement d'air en différents points du bord d'attaque.

Une telle information serait pourtant utile, d'une part pour l'analyse fine *a posteriori* des performances et du comportement de la voile, et d'autre part pour permettre d'améliorer la précision des dispositifs de pilotage assisté ou automatique.

Le brevet JP 02 262 494 divulgue un système de détection du point de stagnation sur une voile utilisant des détecteurs de vitesse d'un écoulement d'air, par exemple des tubes Pitot, arrangés des deux côtés de la voile. La voile est ensuite orientée en fonction de la position du point de stagnation pour obtenir un angle d'incidence optimal.

Le brevet EP 1 211 633 A1 décrit un arrangement matriciel de capteurs de pression fixés sur la voile d'un voilier. Les mesures sont utilisées pour produire une carte de distribution de la pression agissant sur les deux côtés de la voile qui peut servir pour mieux régler les voiles.

## EXPOSÉ DE L'INVENTION

L'invention a notamment pour but d'apporter une solution simple, économique et efficace à ce problème.

Elle propose à cet effet un voilier comprenant une voile, et un système pour la détermination de caractéristiques d'un écoulement d'air incident sur un bord d'attaque de la voile par une détermination des positions de points de stagnation de l'écoulement d'air, le système comprenant :

- des séries de capteurs de pression agencés sur une surface du profil aérodynamique, les capteurs de pression de chaque série étant répartis de part et d'autre du bord d'attaque de la voile, les séries de capteurs de pression formant virtuellement des motifs respectifs espacés les uns des autres, chacun des motifs étant une ligne polygonale simple ; et

- un calculateur relié aux capteurs de pression de manière à recevoir des valeurs locales de pression provenant respectivement des capteurs de pression.

Le calculateur est configuré pour déterminer, le long de chacun desdits motifs, une position de point de stagnation respective, définie par une abscisse curviligne définie le long du motif considéré et pour laquelle une pression P* interpolée à partir de mesures de pression fournies par les capteurs de pression de la série correspondante est maximale le long du motif considéré, et par une altitude, évaluée à partir de données d'altitude respectives des capteurs de pression de la série correspondante.

Les données d'altitude respectives des capteurs de pression sont déterminées à partir d'altitudes respectives des capteurs de pression dans un référentiel fixe par rapport au voilier, et à partir d'une composante variable déterminée, pour chacun des capteurs de pression, à partir de mesures d'orientation du bateau.

Le système permet une détermination précise de la position du point de stagnation en différentes zones le long du bord d'attaque du profil aérodynamique.

La connaissance de la position du point de stagnation est notamment avantageuse en ce qu'elle peut permettre la détermination du module de la vitesse de l'écoulement incident ainsi que de sa direction en différents points le long du bord d'attaque, comme cela apparaîtra plus clairement dans ce qui suit.

Dans des modes de réalisation préférés de l'invention, les motifs s'étendent selon des plans de motif respectifs distincts les uns des autres et tels que chacun des plans de motif est orthogonal au plan osculateur au point d'intersection du bord d'attaque et du plan de motif considéré.

De préférence, les plans de motif sont parallèles entre eux.

Dans des modes de réalisation préférés de l'invention, le système comprend en outre une mémoire comportant une cartographie mettant en relation les positions de point de stagnation, respectivement déterminées le long de chacun desdits motifs, et des paramètres opérationnels de la voile, avec un profil de direction de l'écoulement d'air.

Dans des modes de réalisation préférés de l'invention, le calculateur est en outre configuré pour déterminer, le long de chacun desdits motifs, une pression de stagnation respective, définie en tant que valeur de la pression P* au niveau de la position de point de stagnation correspondante.

De préférence, le système comprend en outre un capteur de pression de référence disposé dans une zone abritée à distance de la voile et relié au calculateur, et le calculateur est en outre configuré pour déterminer un profil de vitesse de l'écoulement d'air à partir d'une pression de référence, fournie par le capteur de pression de référence, et des pressions de stagnation, respectivement déterminées le long de chacun desdits motifs.

En variante, le système comprend en outre un anémomètre relié au calculateur, et le calculateur est en outre configuré pour déterminer un profil de vitesse de l'écoulement d'air en assimilant une valeur de vitesse de l'écoulement d'air fournie par l'anémomètre à une valeur de vitesse de l'écoulement d'air incident sur l'un desdits motifs, et à partir des pressions de stagnation, respectivement déterminées le long de chacun desdits motifs.

Dans des modes de réalisation préférés de l'invention, le voilier comprend un dispositif de pilotage assisté ou automatique configuré pour piloter au moins un paramètre opérationnel de la voile à partir des positions de point de stagnation, respectivement déterminées le long de chacun desdits motifs.

## BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1 est une vue schématique en perspective d'un voilier selon un mode de réalisation préféré de l'invention, en l'occurrence un voilier, comprenant un profil aérodynamique et un système pour la détermination de caractéristiques d'un écoulement d'air incident sur un bord d'attaque du profil aérodynamique ;
- la figure 2 est une vue semblable à la figure 1 et à plus grande échelle du voilier de la figure 1, illustrant une partie avant d'une voile rigide de ce voilier ;
- la figure 3 est une vue schématique en section transversale (c'est-à-dire horizontale) du profil aérodynamique ;
- la figure 4 est un graphique représentant une grandeur $P^* = \rho g z + P$ (en ordonnée), en fonction de la position curviligne normalisée le long d'un motif formé par une série de capteurs de pression disposés de part et d'autre du bord d'attaque (en abscisse) ;
- la figure 5 est une vue à plus grande échelle du détail V de la figure 3, illustrant une position de point de stagnation le long du motif;
- la figure 6 est un graphique représentant la position de point de stagnation (en abscisse) pour différentes hauteurs (en ordonnée) ;
- la figure 7 est un graphique représentant le profil de direction de l'écoulement d'air le long du bord d'attaque ;
- la figure 8 est un graphique représentant la pression de stagnation (en abscisse) pour différentes hauteurs (en ordonnée) ;
- la figure 9 est un graphique représentant le profil de vitesse de l'écoulement d'air le long du bord d'attaque.

## EXPOSÉ DÉTAILLÉ DE MODES DE RÉALISATION PRÉFÉRÉS

L'invention concerne de manière générale un voilier 10 comprenant un profil aérodynamique formant une voile 12 du voilier et un système pour la détermination de caractéristiques d'un écoulement d'air incident sur un bord d'attaque du profil aérodynamique.

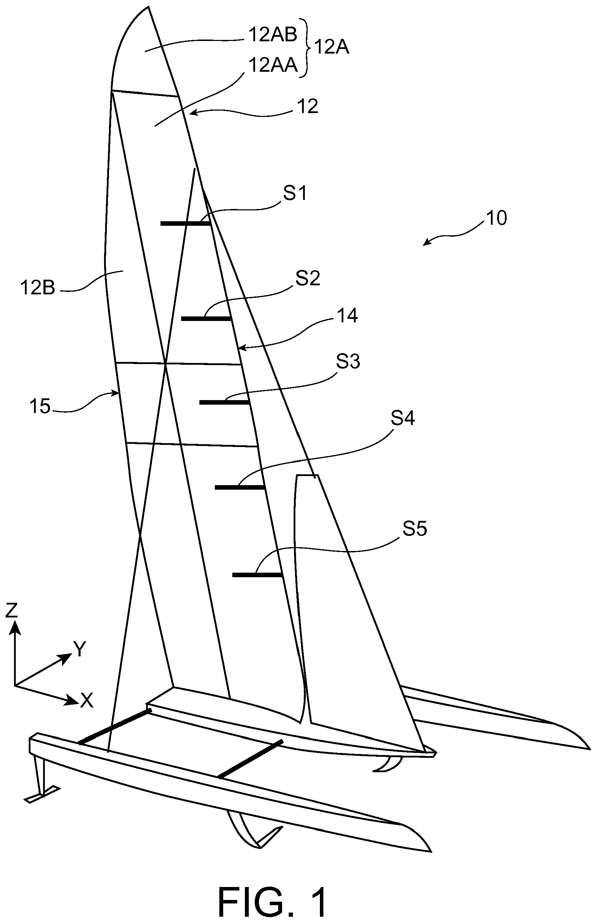

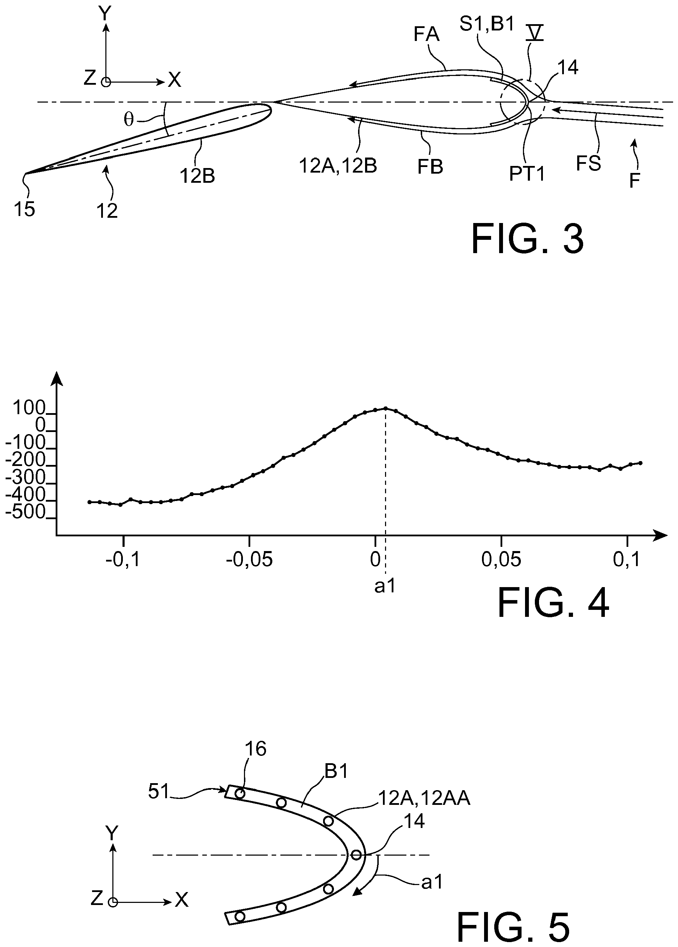

L'exemple décrit concerne plus particulièrement un voilier à voile rigide (parfois dénommée « aile rigide »). La voile rigide remplace typiquement la grand-voile d'un voilier traditionnel, et est en général composée d'un élément avant 12A formant le bord d'attaque 14 du profil, et d'un élément arrière 12B, appelé « flap », formant le bord de fuite 15 du profil et faisant un angle réglable θ par rapport à l'élément avant 12A, parfois dénommé angle de cambrure (visible sur la figure 3). L'élément avant 12A présente en général une partie avant structurelle, qui joue le rôle de mât dans la mesure où c'est par cette partie avant que la voile est montée à rotation sur le bateau. L'élément avant 12A comporte en général un panneau inférieur 12AA et un panneau supérieur 12AB (figure 1) formant entre eux un angle réglable, dénommé angle de vrillage ou angle de twist.

Dans le voilier de la présente description, la direction longitudinale X est définie en tant que direction générale d'avancement du voilier ou encore comme la direction allant de la poupe à l'étrave, la direction transversale Y est la direction orthogonale à la direction longitudinale X allant de tribord vers bâbord, et la direction verticale Z est la direction orthogonale aux directions X et Y.

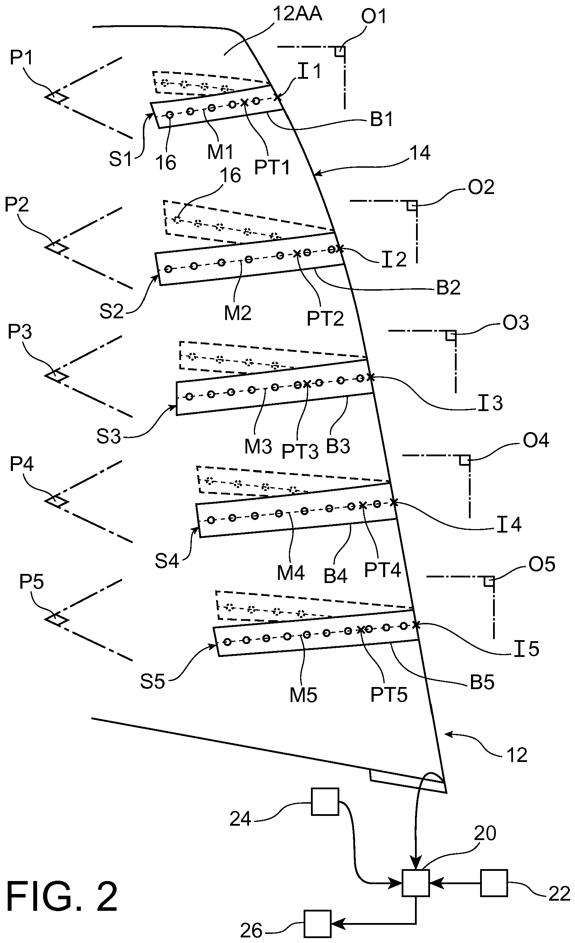

Le système destiné à la détermination de caractéristiques de l'écoulement d'air incident comprend des capteurs de pression 16 (figure 4) agencés sur la surface du profil aérodynamique. Ces capteurs forment, d'une manière générale, des séries S1-S5 (figure 2), par exemple au nombre de cinq, définies physiquement ou non, telles que les capteurs de chaque série soient répartis de part et d'autre du bord d'attaque 14 du profil aérodynamique 12, et telles que les capteurs de chaque série forment virtuellement des motifs respectifs M1-M5 espacés les uns des autres. Chacun des motifs M1-M5 est défini en reliant virtuellement deux-à-deux les capteurs d'une même série de manière à former une ligne polygonale simple, c'est-à-dire une figure géométrique formée d'une suite de segments de droites reliant une suite de points, correspondant aux capteurs, et dans laquelle l'intersection de deux segments distincts appartenant à la ligne polygonale est soit vide, soit réduite à leur sommet commun dans le cas de deux segments successifs. Le fait que les motifs soient espacés les uns des autres implique en particulier que les motifs ne présentent pas d'intersection entre eux.

Les séries S1-S5 de capteurs de pression sont ainsi réparties le long du bord d'attaque 14.

Dans des modes de réalisation préférés de l'invention, les séries S1-S5 de capteurs de pression sont agencées de sorte que les motifs M1-M5 s'étendent selon des plans de motif P1-P5 respectifs distincts les uns des autres et tels que chacun des plans de motif est orthogonal au plan osculateur O1-O5 au point d'intersection I1-I5 du bord d'attaque 14 et du plan de motif considéré (figure 2).

En outre, les séries S1-S5 de capteurs de pression sont avantageusement agencées de sorte que les plans de motif P1-P5 soient localement orthogonaux au bord d'attaque 14.

D'une manière générale, l'agencement des capteurs de pression est de préférence conçu pour minimiser l'angle entre chaque plan de motif et un écoulement d'air moyen ou standard pour le type d'application envisagée.

En pratique, les séries S1-S5 de capteurs de pression sont ainsi de préférence agencées de sorte que les plans de motif P1-P5 soient sensiblement parallèles au vent incident. À proximité du niveau de la mer, le vent est généralement sensiblement parallèle à la direction horizontale. Par conséquent, les plans de motif P1-P5 sont avantageusement sensiblement horizontaux, lorsque le bateau adopte une orientation dépourvue de gite et de tangage.

Par ailleurs, au sein de chaque série S1-S5, les capteurs 16 sont de préférence équidistants deux-à-deux le long du motif M1-M5 correspondant.

Dans des modes de réalisation préférés de l'invention, les séries de capteurs de pression S1-S5 sont définies physiquement. En particulier, les séries de capteurs sont de préférence des bandes B1-B5 fixées sur la surface du profil aérodynamique 12. Les documents WO2015091994A1, WO2015091996A1, et EP3144684A1 décrivent un exemple de bande de capteurs de type micro-électromécanique (MEMS), apte à être utilisée dans le cadre de la présente invention. Une telle bande de capteurs permet en particulier une densité importante de capteurs, apte à offrir un taux élevé d'échantillonnage spatial. Les capteurs MEMS peuvent être cadencés en interne à des vitesses élevées, par exemple à une fréquence de 64Hz, et sont ainsi capables de fournir des données en temps réel avec une cadence adaptée aux traitements réalisés en aval sur les données, par exemple à une fréquence de 16Hz.

Les capteurs de pression 16 sont configurés pour mesurer la pression statique de l'écoulement laminaire d'air longeant le profil aérodynamique. À cet effet, ces capteurs 16 présentent des surfaces sensibles respectives localement parallèles à la surface du profil aérodynamique 12, et donc localement parallèles à l'écoulement d'air au voisinage immédiat du profil aérodynamique.

Le système comprend en outre un calculateur 20 relié aux capteurs de pression 16 de manière à recevoir des valeurs locales de pression provenant respectivement de ces capteurs de pression.

Le calculateur est configuré pour déterminer, le long de chacun des motifs M1-M5, une position de point de stagnation respective, définie en tant que couple de coordonnées (ai, zi), comprenant une abscisse curviligne a1-a5 définie le long du motif M1-M5 considéré, et une altitude z1-z5.

L'abscisse curviligne a1-a5 est déterminée de manière à définir un point du motif considéré, pour lequel une pression $P*$, interpolée à partir de mesures de pression fournies par les capteurs de pression de la série correspondante S1-S5, est maximale.

L'altitude z1-z5 est l'altitude du point précité du motif, évaluée à partir de données d'altitude respectives des capteurs de pression 16 de la série correspondante S1-S5.

Chaque position de point de stagnation définit ainsi la position du point de stagnation du flux d'air incident, dans le plan de motif P1-P5 correspondant, c'est-à-dire la position du point où le flux d'air incident se sépare en deux flux contournant le profil aérodynamique 12 de chaque côté de celui-ci.

Les positions de point stagnation sont référencées PT1 à PT5 sur la figure 2.

En première approximation, les données d'altitude consistent en des altitudes respectives des capteurs de pression 16 dans un référentiel fixe par rapport au bateau. Ces données d'altitude respectives relatives au bateau sont des données fixes prédéterminées, liées à l'agencement des capteurs 16.

Les données d'altitude comprennent en outre une composante variable déterminée, pour chacun des capteurs 16, à partir de mesures d'orientation du bateau (gite, assiette longitudinale) qui sont par exemple fournies par des capteurs gyroscopiques.

La détermination des positions de point de stagnation offre ainsi une précision optimale.

Le système comprend en outre une mémoire 22 comportant une cartographie mettant en relation les positions de point de stagnation, respectivement déterminées le long de chacun desdits motifs M1-M5, et des paramètres opérationnels du profil aérodynamique, avec un profil de direction de l'écoulement d'air. Une telle cartographie est établie au préalable à partir d'un modèle aérodynamique du profil aérodynamique.

Dans l'exemple décrit, les paramètres opérationnels du profil aérodynamique comprennent de préférence l'angle de rotation du mât, ainsi que l'angle de cambrure et l'angle de twist du profil aérodynamique.

Dans le mode de réalisation préféré de l'invention, le calculateur 20 est en outre configuré pour déterminer, le long de chacun des motifs M1-M5, une pression de stagnation respective PS1-PS5, définie en tant que valeur de la pression au niveau de la position de point de stagnation correspondante.

Le système comprend en outre un capteur de pression de référence 24 disposé dans une zone abritée, à distance du profil aérodynamique 12. Il faut comprendre par-là que le capteur de pression de référence 24 est positionné dans une zone normalement non soumise à l'écoulement d'air. Le capteur de pression de référence 24 permet ainsi de mesurer une pression de référence $P_{ref}$ égale à la pression atmosphérique à l'altitude $z_{ref}$ du capteur 24.

Le capteur de pression de référence 24 est relié au calculateur 20.

Ce calculateur 20 est en outre configuré pour déterminer un profil de vitesse de l'écoulement d'air à partir de la pression de référence $P_{ref}$ fournie par le capteur de pression de référence 24 et des pressions de stagnation PS1-PS5, respectivement déterminées le long de chacun desdits motifs M1-M5.

Dans le mode de réalisation préféré de l'invention, la détermination du profil de vitesse repose sur l'application du théorème de Bernoulli, en considérant que pour tout motif Mi (i étant compris entre 1 et 5 dans l'exemple illustré) :

- la pression totale au point de stagnation est égale à la pression de stagnation PSi ;
- cette pression totale est aussi égale à

$$P_{ref} + \rho g(zi - z_{ref}) + \frac{1}{2} \rho \, vi^2, \text{ où :}$$

- $vi$ est la vitesse de l'écoulement d'air incident sur le motif Mi,
- $zi$ est l'altitude de la position de point de stagnation correspondante,
- $\rho$ est la masse volumique de l'air, considérée comme constante et calculée en un point de référence, et
- $g$ est l'accélération de la pesanteur.

D'où la valeur de la vitesse correspondante :

$$vi = \sqrt{\frac{2}{\rho}\left[PSi - P_{ref} - \rho g(zi - z_{ref})\right]}$$

En variante, au lieu d'utiliser la pression de référence fournie par le capteur de référence 24, le calculateur peut être configuré pour déterminer un profil de vitesse de l'écoulement d'air à partir d'une vitesse de référence fournie par un anémomètre agencé suffisamment proche de l'un des motifs Mj (j étant, dans l'exemple décrit, compris entre 1 et 5) et du bord d'attaque pour que la vitesse de l'écoulement d'air incident sur ledit motif Mj puisse être assimilée à la vitesse de référence.

La pression au sein de l'écoulement d'air incident sur le motif Mj peut alors être déterminée au moyen du théorème de Bernoulli, en assimilant ici encore la pression totale au point de stagnation à la pression de stagnation PSj. La vitesse de l'écoulement d'air incident sur les autres motifs peut ensuite être déduite d'une manière analogue à ce qui a été décrit ci-dessus, en remplaçant $P_{ref}$ et $z_{ref}$ par PSj et zj.

Le système peut bien évidemment combiner les deux modes de détermination du profil de vitesse, par mesure de pression de référence et par corrélation respectivement, afin par exemple de fournir des valeurs de vitesse obtenues en faisant la moyenne des résultats fournis par les deux modes de détermination.

Enfin, le voilier 10 comporte en outre un dispositif 26 de pilotage assisté ou automatique configuré pour piloter au moins un paramètre opérationnel du profil aérodynamique à partir des positions de point de stagnation respectivement déterminées le long de chacun des motifs M1-M5.

Les paramètres opérationnels pilotés par le dispositif 26 comprennent de préférence l'angle de cambrure et l'angle de vrillage.

Le fonctionnement d'un voilier selon l'invention, par exemple le voilier 10, va maintenant être décrit en référence aux figures 3-9.

La figure 3 montre une section transversale du profil aérodynamique 12, par exemple dans le plan P1 de la série de capteurs S1.

La figure 3 montre en particulier un écoulement d'air F incident sur le bord d'attaque 14, se séparant en deux flux FA et FB contournant respectivement le profil aérodynamique 12 de chaque côté de celui-ci. Les flux FA et FB sont séparés l'un de l'autre par une ligne de stagnation FS qui rencontre le bord d'attaque au niveau d'un point de stagnation PS1 correspondant. L'angle d'incidence du flux F sur le bord d'attaque 14, et donc la position du point de stagnation, est susceptible de varier le long du bord d'attaque 14 (c'est-à-dire en fonction de l'altitude).

Le calculateur 20 reçoit à haute fréquence (par exemple 64 Hz) les valeurs locales de pression $P^*$ provenant respectivement des capteurs de pression 16. Le calculateur effectue de préférence un filtrage temporel de ces valeurs locales de pression afin de s'affranchir de fluctuations non significatives.

La figure 4 est un graphique représentant, sous la forme de points, la valeur locale de la pression $P^*$ en Pascal (en ordonnée) pour chacun des capteurs 16 de l'une des séries, par exemple la série S1. L'axe des abscisses correspond à l'abscisse curviligne des capteurs le long du motif correspondant M1, qui par commodité a été normalisée par rapport à la corde du profil aérodynamique.

Pour chaque série de capteurs S1-S5, le calculateur réalise une interpolation des valeurs locales de la pression $P^*$, aboutissant à la courbe reliant les points sur la figure 4, puis le calculateur détermine la position du maximum de la pression $P^*$ sur la courbe, qui définit l'abscisse a1-a5 de la position de point de stagnation correspondante.

Le calculateur détermine également l'altitude z1-z5 de la position de point de stagnation correspondante, de préférence par interpolation des données d'altitude relatives aux capteurs de pression 16. Ces données sont déterminées à partir de l'emplacement de chacun des capteurs sur le profil aérodynamique, enregistré dans la mémoire 22, et ces données sont, dans le mode de réalisation préféré de l'invention, affinées au moyen des mesures d'orientation du bateau, qui sont par exemple fournies au calculateur à une fréquence moindre (par exemple de 10 Hz).

La figure 5 est une vue à plus grande échelle de la partie V de la figure 3, sur laquelle l'épaisseur d'une bande de capteurs B1 et les dimensions de chaque capteur 16 sont exagérées tandis que le nombre de capteurs représentés est fortement réduit, à des fins de clarté. Cette figure montre l'abscisse a1 de la position de point de stagnation le long du motif M1, qui coïncide par exemple sensiblement avec la position d'un capteur 16.

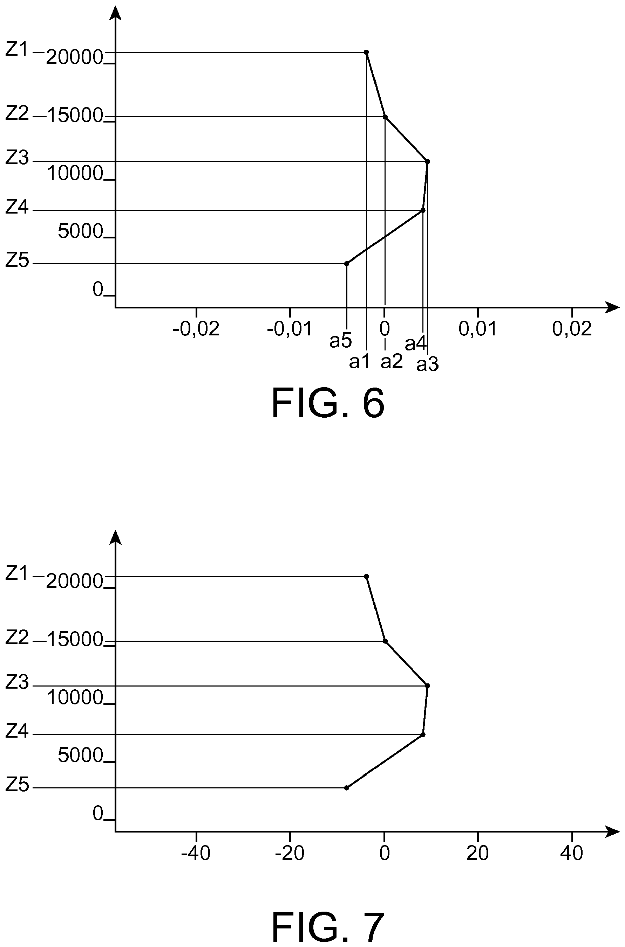

La figure 6 est un graphique représentant les positions de point de stagnation $(a1; zl)-(a5 ; z5)$ respectivement déterminées pour les différentes séries de capteurs S1-S5. L'axe des abscisses indique l'abscisse curviligne normalisée par rapport à la corde du profil aérodynamique, tandis que l'axe des ordonnées indique l'altitude en millimètre.

À partir des positions de point de stagnation et de la cartographie stockée dans la mémoire 22, le calculateur détermine un profil de direction de l'écoulement d'air le long du bord d'attaque 14, illustré par la figure 7, sur laquelle l'axe des abscisses indique l'orientation de l'écoulement d'air en degrés, tandis que l'axe des ordonnées indique l'altitude en millimètre.

De plus, le calculateur détermine, le long de chacun des motifs M1-M5, la pression de stagnation respective PS1-PS5, qui comme expliqué ci-dessus, est définie en tant que valeur de la pression au niveau de la position de point de stagnation correspondante.

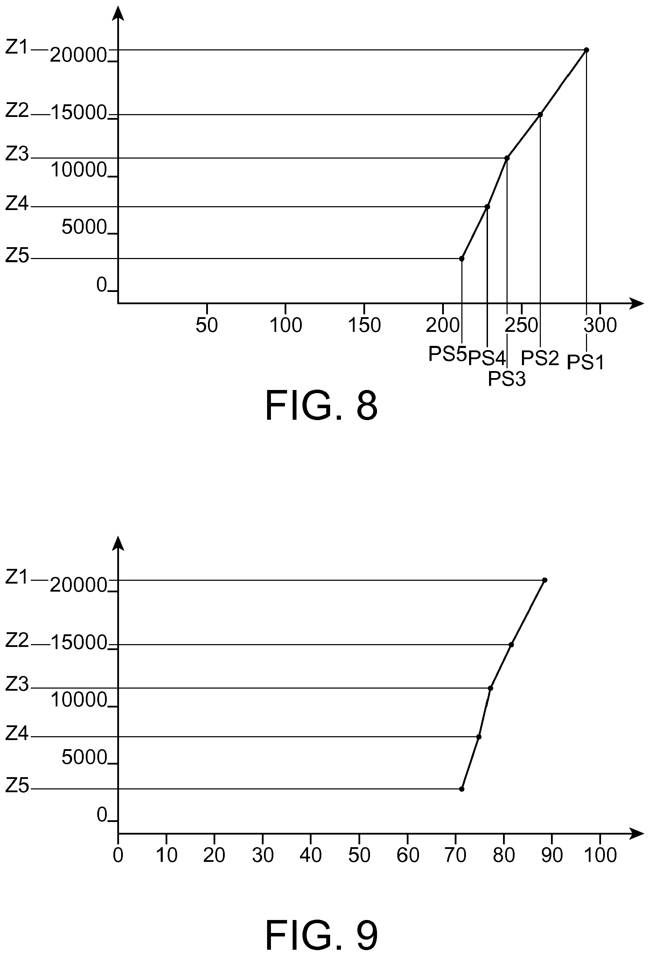

La figure 8 est un graphique représentant les pressions de stagnation PS1-PS5 en Pascal (en abscisse) respectivement déterminées pour les différentes séries de capteurs S1-S5, identifiées par l'altitude de la position de point de stagnation respective en millimètre (en ordonnée).

Le calculateur 20 détermine en outre un profil de vitesse de l'écoulement d'air, selon l'une au moins des méthodes décrites ci-dessus. La figure 9 illustre un exemple de profil de vitesse ainsi obtenu. L'axe des abscisses indique la vitesse en km/h, tandis que l'axe des ordonnées indique l'altitude en millimètre.

En variante, l'invention est également applicable à une voile souple, auquel cas le profil aérodynamique, sur lequel sont disposés les séries de capteurs de pression, est constitué d'un mât profilé rigide agencé à l'extrémité avant de la voile.

**Documents cités dans la description :**

[0068] WO2015091994A1, correspondant au document US2016313150 ;

[0069] WO2015091996A1, correspondant au document US20170079152 ;

[0070] EP3144684A1, correspondant au document US20170074750.

**Revendications**

1. Voilier comprenant une voile (12), et un système pour la détermination de caractéristiques d'un écoulement d'air (F) incident sur un bord d'attaque (14) de la voile par une détermination des positions de points de stagnation de l'écoulement d'air, le système comprenant :

- des séries (S1-S5) de capteurs de pression (16) agencés sur une surface de la voile (12), les capteurs de pression (16) de chaque série étant répartis de part et d'autre du bord d'attaque (14) de la voile, les séries (S1-S5) de capteurs de pression formant virtuellement des motifs (M1-M5) respectifs espacés les uns des autres, chacun des motifs étant une ligne polygonale simple ; et

- un calculateur (20) relié aux capteurs de pression (16) de manière à recevoir des valeurs locales de pression provenant respectivement des capteurs de pression ;

dans lequel le calculateur (20) est configuré pour déterminer, le long de chacun desdits motifs (M1-M5), une position de point de stagnation respective, définie par une abscisse curviligne (a1-a5) définie le long du motif (M1-M5) considéré et pour laquelle une pression $P*$ interpolée à partir de mesures de pression fournies par les capteurs de pression (16) de la série (S1-S5) correspondante est maximale le long du motif considéré, et par une altitude (z1-z5), évaluée à partir de données d'altitude respectives des capteurs de pression (16) de la série (S1-S5) correspondante

dans lequel les données d'altitude respectives des capteurs de pression (16) sont déterminées à partir d'altitudes respectives des capteurs de pression (16) dans un référentiel fixe par rapport au voilier, et à partir d'une composante variable déterminée, pour chacun des capteurs de pression (16), à partir de mesures d'orientation du bateau.

2. Voilier selon la revendication 1, dans lequel les motifs (M1-M5) s'étendent selon des plans de motif (P1-P5) respectifs distincts les uns des autres et tels que chacun des plans de motif est orthogonal au plan osculateur (O1-O5) au point d'intersection du bord d'attaque (14) et du plan de motif (P1-P5) considéré.

3. Voilier selon la revendication 2, dans lequel les plans de motif (P1-P5) sont parallèles entre eux.

4. Voilier selon l'une quelconque des revendications 1 à 3, dans lequel le système comprend en outre une mémoire (22) comportant une cartographie mettant en relation les positions de point de stagnation, respectivement déterminées le long de chacun desdits motifs (M1-M5), et des paramètres opérationnels de la voile (12), avec un profil de direction de l'écoulement d'air (F).

5. Voilier selon l'une quelconque des revendications 1 à 4, dans lequel le calculateur (20) est en outre configuré pour déterminer, le long de chacun desdits motifs (M1-M5), une pression de stagnation (PS1-PS5) respective, définie en tant que valeur de la pression $P^*$ au niveau de la position de point de stagnation correspondante.

6. Voilier selon la revendication 5, dans lequel le système comprend en outre un capteur de pression de référence (24) disposé dans une zone abritée à distance de la voile (12) et relié au calculateur (20), et dans lequel le calculateur (20) est en outre configuré pour déterminer un profil de vitesse de l'écoulement d'air (F) à partir d'une pression de référence $P_{ref}$, fournie par le capteur de pression de référence (24), et des pressions de stagnation (PS1-PS5), respectivement déterminées le long de chacun desdits motifs (M1-M5).

7. Voilier selon la revendication 5, dans lequel le système comprend en outre un anémomètre relié au calculateur (20), et dans lequel le calculateur est en outre configuré pour déterminer un profil de vitesse de l'écoulement d'air (F) en assimilant une valeur de vitesse de l'écoulement d'air fournie par l'anémomètre à une valeur de vitesse de l'écoulement d'air incident sur l'un desdits motifs (M1-M5), et à partir des pressions de stagnation (PS1-PS5), respectivement déterminées le long de chacun desdits motifs (M1-M5).

8. Voilier selon l'une quelconque des revendications 1 à 7, comprenant un dispositif (26) de pilotage assisté ou automatique configuré pour piloter au moins un paramètre opérationnel de la voile (12) à partir des positions de point de stagnation, respectivement déterminées le long de chacun desdits motifs (M1-M5).

**Patentansprüche**

1. Segelboot, das ein Segel (12) und ein System zur Bestimmung von Merkmalen eines auf ein Vorliek (14) des Segels auftreffenden Luftstroms (F) durch eine Bestimmung der Positionen von Staupunkten des Luftstroms enthält, wobei das System enthält

   - Reihen (S1-S5) von Drucksensoren (16), die auf einer Fläche des Segels (12) angeordnet sind, wobei die Drucksensoren (16) jeder Reihe zu beiden Seiten des Vorlieks (14) des Segels verteilt sind, wobei die Reihen (S1-S5) von Drucksensoren virtuell voneinander entfernte Muster (M1-M5) formen, wobei jedes der Muster eine einfache polygonale Linie ist; und

   - einen Rechner (20), der mit den Drucksensoren (16) verbunden ist, um von den Drucksensoren kommende lokale Druckwerte zu empfangen;
   wobei der Rechner (20) konfiguriert ist, entlang jedes der Muster (M1-M5) eine Staupunktposition zu bestimmen, definiert durch eine entlang des betreffenden Musters (M1-M5) definierte Bogenlänge (a1-a5) und für die ein ausgehend von von den Drucksensoren (16) der entsprechenden Reihe (S1-S5) gelieferten Druckmesswerten interpolierter Druck $P^*$ entlang des betreffenden Musters maximal ist, und durch eine Höhe (z1-z5), die ausgehend von jeweiligen Höhendaten der Drucksensoren (16) der entsprechenden Reihe (S1-S5) ermittelt wird, wobei die jeweiligen Höhendaten der Drucksensoren (16) ausgehend von jeweiligen Höhen der Drucksensoren (16) in einem ortsfesten Bezugssystem bezüglich des Segelboots und ausgehend von einer bestimmten variablen Komponente für jeden der Drucksensoren (16) ausgehend von Ausrichtungsmesswerten des Boots bestimmt werden.

2. Segelboot nach Anspruch 1, wobei die Muster (M1-M5) sich gemäß Musterebenen (P1-P5) erstrecken, die sich voneinander unterscheiden und so sind, dass jede der Musterebenen orthogonal zur Schmiegungsebene (O1-O5) am Schnittpunkt des Vorlieks (14) und der betreffenden Musterebene (P1-P5) ist.

3. Segelboot nach Anspruch 2, wobei die Musterebenen (P1-P5) zueinander parallel sind.

4. Segelboot nach einem der Ansprüche 1 bis 3, wobei das System außerdem einen Speicher (22) enthält, der eine Kartographie aufweist, die die Staupunktpositionen, die entlang jedes der Muster (M1-M5) bestimmt werden, und Betriebsparameter des Segels (12) mit einem Richtungsprofil des Luftstroms (F) in Zusammenhang bringt.

5. Segelboot nach einem der Ansprüche 1 bis 4, wobei der Rechner (20) außerdem konfiguriert ist, entlang jedes der Muster (M1-M5) einen Staudruck (PS1-PS5) zu bestimmen, der als Wert des Drucks $P^*$ im Bereich der entsprechenden Staupunktposition definiert ist.

6. Segelboot nach Anspruch 5, wobei das System außerdem einen Bezugsdrucksensor (24) enthält, der in einer geschützten Zone in Abstand zum Segel (12) und mit dem Rechner (20) verbunden angeordnet ist, und wobei der Rechner (20) außerdem konfiguriert ist, ein Geschwindigkeitsprofil des Luftstroms (F) ausgehend von einem vom Bezugsdrucksensor (24) geliefert Bezugsdruck $P_{ref}$ und von den Staudrücken (PS1-PS5) zu bestimmen, die entlang jedes der Muster (M1-M5) bestimmt werden.

**7.** Segelboot nach Anspruch 5, wobei das System außerdem einen mit dem Rechner (20) verbundenen Windmesser enthält, und wobei der Rechner außerdem konfiguriert ist, ein Geschwindigkeitsprofil des Luftstroms (F) durch Gleichsetzen eines vom Windmesser gelieferten Geschwindigkeitswerts des Luftstroms und eines Geschwindigkeitswerts des auf eines der Muster (M1-M5) einfallenden Luftstroms und ausgehend von Staudrücken (PS1-PS5) zu bestimmen, die entlang jedes der Muster (M1-M5) bestimmt werden.

**8.** Segelboot nach einem der Ansprüche 1 bis 7, das eine Servo- oder Automatiksteuervorrichtung (26) enthält, die konfiguriert ist, mindestens einen Betriebsparameter des Segels (12) ausgehend von den Staupunktpositionen zu steuern, die entlang jedes der Muster (M1-M5) bestimmt werden.

**Claims**

**1.** Sailing vessel comprising a sail (12) and a system for determining characteristics of an incident airflow (F) on a leading edge (14) of the sail by a determination of the positions of stagnation points of the airflow, the system comprising:

- series (S1-S5) of pressure sensors (16) arranged on a surface of the sail (12), the pressure sensors (16) of each series being distributed on either side of the leading edge (14) of the sail, the series (S1-S5) of pressure sensors virtually forming respective patterns (M1-M5) spaced apart from one another, each of the patterns being a simple polygonal line; and
- a computer (20) linked to the pressure sensors (16) so as to receive local pressure values originating respectively from the pressure sensors; wherein the computer (20) is configured to determine, along each of the said patterns (M1-M5), a respective stagnation point position, defined by a curvilinear abscissa (a1-a5) defined along the pattern (M1-M5) concerned and for which a pressure $P^*$ interpolated from pressure measurements supplied by the pressure sensors (16) of the corresponding series (S1-S5) is maximal along the pattern concerned, and by an altitude (z1-z5), evaluated from respective altitude data of the pressure sensors (16) of the corresponding series (S1-S5) wherein the respective altitude data of the pressure sensors (16) are determined from respective altitudes of the pressure sensors (16) in a fixed reference frame relative to the sailing vessel, and from a variable component determined for each of the pressure sensors (16), from measurements of orientation of the boat.

**2.** Sailing vessel according to Claim 1, wherein the patterns (M1-M5) lie in respective pattern planes (P1-P5) that are distinct from one another and such that each of the pattern planes is orthogonal to the osculating plane (01-05) at the point of intersection of the leading edge (14) and of the pattern plane (P1-P5) concerned.

**3.** Sailing vessel according to Claim 2, wherein the pattern planes (P1-P5) are parallel to one another.

**4.** Sailing vessel according to any one of Claims 1 to 3, wherein the system further comprises a memory (22) comprising a mapping correlating the stagnation point positions, respectively determined along each of said patterns (M1-M5), and operational parameters of the sail (12), with a direction profile of the airflow (F).

**5.** Sailing vessel according to any one of Claims 1 to 4, wherein the computer (20) is further configured to determine, along each of said patterns (M1-M5), a respective stagnation pressure (PS1-PS5), defined as the value of the pressure $P^*$ at the corresponding stagnation point position.

**6.** Sailing vessel according to Claim 5, wherein the system further comprises a reference pressure sensor (24) disposed in a sheltered zone away from the sail (12) and linked to the computer (20), and wherein the computer (20) is further configured to determine a speed profile of the airflow (F) from a reference pressure $P_{ref}$, supplied by the reference pressure sensor (24), and from the stagnation pressures (PS1-PS5), respectively determined along each of said patterns (M1-M5).

**7.** Sailing vessel according to Claim 5, wherein the system further comprises an anemometer linked to the computer (20), and wherein the computer is further configured to determine a speed profile of the airflow (F) by comparing an airflow speed value supplied by the anemometer to a speed value of the airflow incident on one of said patterns (M1-M5), and from the stagnation pressures (PS1-PS5), respectively determined along each of said patterns (M1-M5).

**8.** Sailing vessel according to any one of Claims 1 to 7, comprising an assisted or automatic piloting device (26) configured to control at least one operational parameter of the sail (12) on the basis of the stagnation point positions, respectively determined along each of said patterns (M1-M5).

12AB
12AA
} 12A

12

S1

10

12B

S2

14

S3

15

S4

S5

Z
Y
X

FIG. 1

FIG. 2

**FIG. 3**

**FIG. 4**

**FIG. 5**

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 02262494 A
- EP 1211633 A1
- WO 2015091994 A1
- WO 2015091996 A1
- EP 3144684 A1
- US 2016313150 A
- US 20170079152 A
- US 20170074750 A